# EUROPEAN PATENT SPECIFICATION

(11) **EP 4 482 100 B1**
(45) Date of publication and mention of the grant of the patent: **04.06.2025**
(21) Application number: 23180101.0
(22) Date of filing: 19.06.2023
(51) Int. Cl.: H04L 41/0873, H04L 41/0895, H04L 43/20, H04L 41/40, H04L 41/5041, H04L 41/08, H04L 41/16

(54) **TECHNIQUES FOR EVALUATING A QUALITY OF A COMBINATION OF A NETWORK SLICE CONFIGURATION AND AN ATSSS CONFIGURATIONS**
VERFAHREN ZUR BEURTEILUNG EINER QUALITÄT EINER KOMBINATION AUS EINER NETZWERKSCHICHTKONFIGURATION UND ATSS-KONFIGURATIONEN
TECHNIQUES D'ÉVALUATION D'UNE QUALITÉ D'UNE COMBINAISON D'UNE CONFIGURATION DE TRANCHE DE RÉSEAU ET D'UNE CONFIGURATION D'ATSSS

(43) Date of publication of application: 25.12.2024
(73) Proprietor: Deutsche Telekom AG, 53113 Bonn (DE)
(72) Inventor: AMEND, Markus, 63667 Nidda (DE)
(74) Representative: Braun-Dullaeus Pannen Emmerling Patent- & Rechtsanwaltspartnerschaft mbB

(56) References cited:
- WO-A1-2022/005917
- US-A1- 2021 075 678
- "Zero-touch network and Service Management (ZSM); End-to-end management and orchestration of network slicing", vol. ISG - ZSM, no. V1.1.1, 21 June 2021 (2021-06-21), pages 1 - 87, XP014416431, Retrieved from the Internet <URL:ftp://docbox.etsi.org/ISG/ZSM/Open/Publications_pdf/ZSM%20003v1.1.1%20-%20GS%20-%20Network%20Slicing.pdf> [retrieved on 20210621]
- "3rd Generation Partnership Project; Technical Specification Group Services and System Aspects; System architecture for the 5G System (5GS); Stage 2 (Release 18)", vol. SA WG2, no. V18.1.0, 5 April 2023 (2023-04-05), pages 1 - 667, XP052284559, Retrieved from the Internet <URL:https://ftp.3gpp.org/Specs/archive/23_series/23.501/23501-i10.zip 23501-i10.docx> [retrieved on 20230405]

## Description

The invention relates to a method, a network coordinating unit, a communication system and to a computer program for evaluating a quality of a combination of a network slice configuration and an ATSSS configuration.

### BACKGROUND

With the specification of 5G, also the definition of Network Slices was introduced to provide tailored network services to meet different SLAs. A Network Slice is a logical network with defined network capabilities and services. It comprises control plane and user plane network functions. Network resources are dedicated and independent.

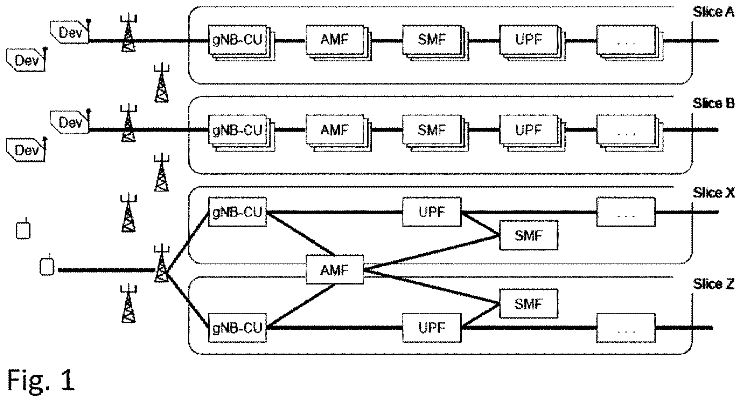

Multiple logical networks, i.e. the network slices, with defined network capabilities and services running on a shared physical network infrastructure are possible. Dedicated to various services or customers and with full isolation of resources between different slices. One UE may use one or few slices simultaneously as can be seen in Fig. 1.

In a 3GPP system, a Network Slice (NWS) is identified with the S-NSSAI (Single-Network Slice Assistance Information).
S-NSSAI = SST [+SD], with SST= Slice/Service Type and SD= Slice Differentiator; the SST as a mandatory identifier holds 8 Byte in total with the first half (0-127) being foreseen for standardized values and the other half for non-standardized values. So far Rel. 15 specifies SST 1-3, while following releases define additional SST 4-5 in 3GPP TS 23.501.
SST = 1, eMBB (enhanced Mobile Broadband) Slice suitable for the handling of 5G enhanced mobile broadband, useful, but not limited to the general consumer space of mobile broadband applications including streaming of High Quality Video, fast large file transfers etc. Aimed at supporting high data rates and high traffic densities as outlined in Table 7.1-1 "Performance requirements for high data rate and traffic density scenarios" in TS 22.261. 5QI = 1,2,5-9, SSC Mode 1, N26 interface for seamless continuity;
SST = 2, URLLC (Ultra-Reliable Low Latency Communication) supporting ultra-reliable low latency communications for applications like industrial automation, (remote) control systems. Aimed at supporting the requirements in Table 7.2.2-1 "Performance requirements for low-latency and high-reliability services." in TS 22.261 related to high reliability and low latency scenarios. 5QI = 82;
SST = 3, MIoT (Massive IoT), mMTC (massive Machine Type Communication) allowing the support of a large number and high density of IoT devices efficiently and cost effectively. 5QI = 9;
SST = 4, V2X (Vehicle-to-Everything) allowing the support of low-latency reliable communication to and from vehicles; as of Rel. 16;
SST = 5, HMTC (High-Performance Machine-Type Communications) Allowing the support IoT devices with high throughput requirements. 5QI = 83; as of Rel. 17;

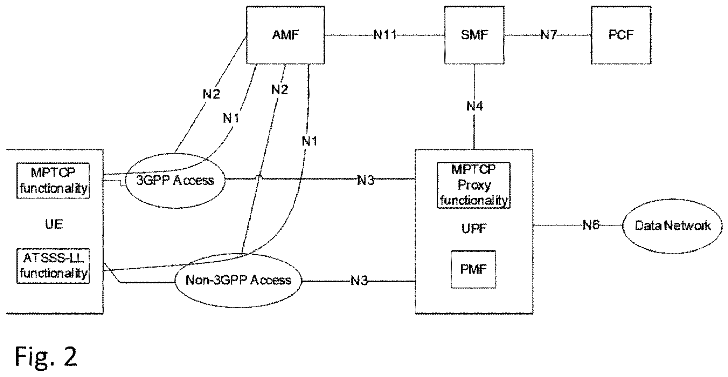

Another technology which aims to provide better connectivity experience is Access Traffic Steering Switching Splitting - ATSSS. As of Rel. 16, ATSSS is defined to combine 3GPP and non-3GPP access between an UE or a RG and a 5G core. Depending on the negotiated features during a MA-PDU session establishment and the exchange of ATSSS rules it can be selected whether to apply Steering, Switching or Splitting, the steering function (ATSSS-LL or MPTCP), the steering mode (Priority-based, ... see TS 23.501) and the service scope. The latter is using ATSSS specific UE Route Selection Policies (URSP), ATSSS rules, to apply ATSSS settings for any traffic or for particular traffic based on AppID, IP address, etc. Using ATSSS, will redirect any traffic sent over the non-3GPP access through the 5G core, mainly the N3IWF (or TNAN or TWIF) and the ATSSS UPF as can be seen in Fig. 2.

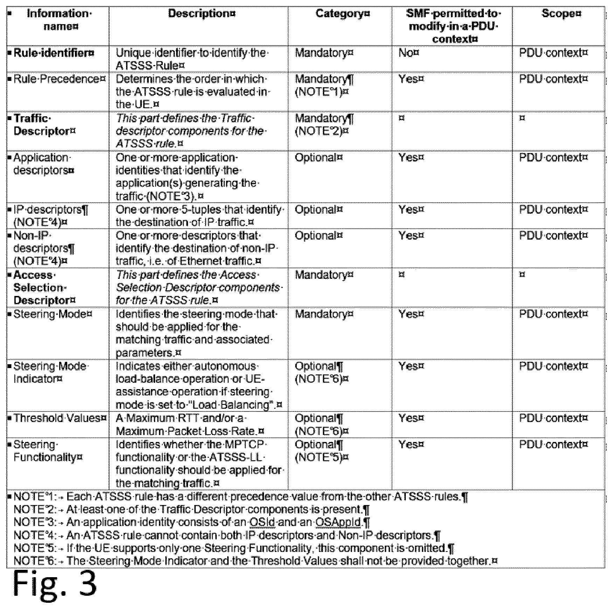

The selection of traffic for which ATSSS applies and the ATSSS configuration can be selected using ATSSS rules that are shown in Fig. 3. The traffic is matched with a Traffic Descriptor for which an ATSSS configuration based on the Access Selection Descriptor is provided. 3GPP TS 24.193 v18.0.0 defines the following Steering Functionalities and Steering Modes:
[...]
1) a steering functionality set to:
   A) MPTCP functionality, the UE steers the SDF by using the MPTCP functionality; or
   B) ATSSS-LL functionality, the UE steers the SDF by using the ATSSS-LL functionality;
   C) UE's supported steering functionality;

   NOTE 0: The steering functionality can only be set to "UE's supported steering functionality" if the UE indicated that the UE supports only "ATSSS Low-Layer functionality with any steering mode".
   NOTE 1: If the included steering functionality is not supported by the UE, the UE ignores this ATSSS rule, and proceeds with the evaluation of the ATSSS rule with the next smallest precedence, if available.
2) a steering mode:
   A) active-standby, the UE steers the SDF by using the active access if the active access is available. If the active access is not available and the standby access is available, the UE steers the SDF by using the standby access;
   B) smallest delay, the UE steers the SDF by using the access network with the smallest RTT. If there is only one access available, the UE steers the SDF by using the available access. This steering mode is only applicable to non-GBR SDF;
   C) load balancing, the UE steers the SDF across both the 3GPP access and the non-3GPP access with a given percentage if both accesses are available. If there is only one access available, the UE steers the SDF by using the available access. This steering mode is only applicable to non-GBR SDF; or
   D) priority based, the UE steers the SDF over the access with high priority unless the access with high priority is congested or unavailable, when the UE steers the SDF over both the access with high priority and the access with low priority. This steering mode is only applicable to non-GBR SDF;

[...]

The ETSI standard GS ZSM 003 V1.1.1 discloses (clause 6.2.2.2.6 with reference to Fig. 6.2.2.2.6-1) a E2E service Management Domain which obtains a Network Slice Instance (NSI) Description and Network Parameters of a network and performs a Qualitative Feasibility Check which determines whether the NSI is feasible or not in said network. OBJECT OF THE INVENTION

The 3GPP specification does not exclude a combination of NWS and the ATSSS feature. Therefore, it is likely, that both technologies will be combined. Actually, the combination of both technologies has many advantages, especially if SLAs over mobile cannot be met or such SLAs can be achieved more cost efficient over non-3GPP access (Wi-Fi, fixed).

This extends the scope of network slices beyond cellular access. Basically, network slices are used to provide distinct network functions and/or network resources (e.g., radio resources) in the scope of a mobile network. Other networks like Wi-Fi or fixed networks are not covered by any network slice definition. Nonetheless, there are situation when network slices cannot provide the requested resources (physical limitation (edge situation, crowded cell), regulatory issues (network neutrality)) or another non-3GPP access (e.g., Wi-Fi) promise to provide better characteristics. In these cases, an ATSSS functionality provides the option to move data traffic into a non-3GPP access which provides better capabilities than the 3GPP access. Depending on the selected ATSSS configuration traffic can be seamlessly shifted between the accesses without interrupting communication.

In such a mixed scenario of NWS and ATSSS usage the following situation can occur, if SST=2 is selected to ensure low-latency over mobile (3GPP access), it is advisable to configure ATSSS steering mode to "smallest delay" - so that both NWS and ATSSS configuration show the same objectives. This combination of NWS configuration and ATSSS configuration ensures the selection of the access path which provides the lowest latency. In the beginning this might be a Wi-Fi access because the UE is located at the edge of a cell. After some time, if the UE moved, cellular connectivity might provide a better latency by applying the SST=2 network slice configuration which can be measured by an ATSSS functionality. In this case ATSSS will select the 3GPP access and switch the data traffic.

The term ATSSS configuration shall also comprise the ATSSS rules as shown in Fig. 3.

However, currently it is in the hand of the network operator to ensure that both technologies do not interfere in a negative way, which would be the case if in above example ATSSS is configured to use Wi-Fi only or prioritized, because the data communication would not use the 3GPP access in this case even if it provides a better latency.

As more network slice and ATSSS configuration exist, this becomes more and more difficult to be controlled manually. This is further aggravated by the trend to automate operator network(s) provide external configuration through network APIs, e.g., 3GPP Network Exposure Function. The latter allows externals (customers) to provide instructions to the operator network most often in an abstracted way, as they are not familiar with the detailed 3GPP settings. Due to the complexity and/or invisible details due to abstraction, interfering configuration are inevitable.

In the view of above, it is an object of the present invention to provide techniques to ensure an efficient combination of network slice configuration and ATSSS configuration regarding a data traffic.

Again, within the context of the invention is to be understood that if the network slice configuration and ATSSS configuration interfere with each other, they are hindering each other that leads in particular to a lower network performance, in particular to worse QoS experience.

### SUMMARY OF THE INVENTION

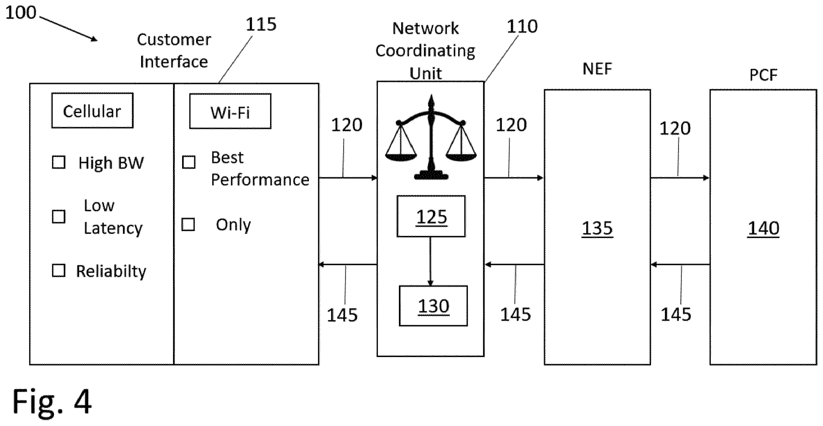

This object is solved by the features of the independent claims, which define the present invention. In particular, the invention is best understood with reference to Figure 4 below.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein. According to a first aspect of the invention, a method for evaluating a quality of a combination of a network slice configuration and an ATSSS configuration for providing data traffic in a network is disclosed. Network slicing and ATSSS can be used combined or in a parallel usage. In particular both techniques (ATSSS and network slicing) are provided by the same network operator. The data traffic can be data traffic that is associated to an application running on a user equipment of the user or associated to a service running on a server. The method comprises the following steps:
- obtaining a network slice configuration and an ATSSS configuration for a communication use case;
   o the communication use case is typically related to traffic from an app running on an UE or a service running on a server; the network slice configuration and/or the ATSSS configuration can be obtained by a customer interface; in an embodiment, the UE and/or the server send the network slice configuration and/or the ATSSS configuration; in an embodiment, the network slice configuration and/or the ATSSS configuration is obtained, in particular extracted, from the data protocols associated to the data traffic of the use case; is also possible that the network slice configuration and/or the ATSSS configuration is being obtained indirectly by analyzing the characteristics of the data traffic by an artificial intelligence - in this case, the artificial intelligence was trained before to detect different network slice and ATSSS configurations; in an embodiment the network slice configuration and/or the ATSSS configuration is being obtained or stored on the PCF of the network and/or the steps of the method are executed by the PCF;
- determining a quality of a combination of the network slice configuration and the ATSSS configuration and determining if the quality represents a mutually supporting combination or a mutually interfering combination of a network configuration.
   ∘ in this sense, the quality can be a good or bad quality of the combination of network slice and ATSSS usage;
   o the determination can be performed by an algorithm implemented on a processing unit; as will be explained below detail, the algorithm can be based on lookup tables and/or an artificial intelligence and/or machine learning;
   ∘ in particular, the determination is being performed in an automatic fashion inside the network or within the UE and/or the server;

This provides the advantage that for the first time it is possible to detect if a combination of network slicing and ATSSS usage shows potentially a bad quality that is hindering each other and let for example the network performance degrade compared to a scenario without the combination of ATSSS and network slicing. That makes it possible to judge if the current combination of ATSSS and network slicing usage is being efficient with regard to the data traffic or might lead to a degradation of QOS values for the data traffic.

In an embodiment, the method further comprises
- extracting a first objective of the network slice configuration and extracting a second objective of the ATSSS configuration; and
   o the extracting step can be performed by an algorithm - in particular by the algorithm mentioned above - that is implemented on the processing unit; in particular, an artificial intelligence or machine learning can assess the objectives of the network slice configuration or of the ATSSS configuration; for that purpose the artificial intelligence is based on a trained neural network, wherein input training data are the respective configurations which are marked with the associated objectives that can be labeled by technical experts;
   o possible objectives are to provide a minimal latency, to provide a maximum bandwidth, to provide the best overall performance, to provide a certain level of reliability and/or to use only the Wi-Fi or cellular path. In particular it can make sense to use only the Wi-Fi path due to cost reasons;
- determining if the quality represents a mutually supporting combination or a mutually interfering combination of a network configuration with regard to the first objective and the second objective.

This provides the advantage that the analysis of the quality of the combination of the configurations can be done on a higher level of abstraction that is independent of predefined or known ATSSS rules or network slicing configurations. This is of particular advantage, if new ATSSS rules and/or network slicing configurations are configured by customers. The respective objectives can be automatically determined and represent what the user actually "wants" by creating the ATSSS rules or network slicing configuration in a certain way. This is a prerequisite to analyze if those objectives are a mutually supporting combination or a mutually interfering combination of a network configuration.

Hence, in this case the method could be written as follows: A method for evaluating the quality of a combination of the network slice configuration and the ATSSS configuration for the data traffic in a network, wherein the method comprises the following steps:
- obtaining the network slice configuration and the ATSSS configuration for the communication use case;
- extracting the first objective of the network slice configuration and extracting the second objective of the ATSSS configuration;
- determining the quality of a combination of the network slice configuration and the ATSSS configuration and determining if the quality represents a mutually supporting combination or a mutually interfering combination of a network configuration with regard to the first objective and the second objective.

If more than one artificial intelligence is being mentioned within the description of the invention, it is to be understood that all those different artificial intelligences could be implemented within a single "global" artificial intelligence or could be provided as different artificial intelligence modules. However, technically this would yield no difference.

In an embodiment, a common objective is determined, in particular if the first and the second objective are mutually interfering with each other.

This provides the advantage that the common objective can be set accordingly so that the ATSSS configuration and the network slicing configuration do not mutually interfere with each other but represent a mutually supporting combination of configurations.

In an embodiment, the network slice configuration and/or the ATSSS configuration is adjusted, in particular to improve the network performance of the combined usage of ATSSS and network slicing, in particular with regard to the common objective. For this purpose, a processing unit can be configured to manipulate the data of the ATSSS configuration and/or the network slicing configuration accordingly. In particular, the common objective can be translated to a certain network slicing configuration and/or to certain ATSSS rules.

This provides the advantage that both of the configurations are actually brought into accordance to support each other. In particular, this can be done in an automatic fashion.

In an embodiment, the adjustment of at least one of the configurations and/or the determination of the common objective is based on a policy of a network operator, user preferences, AI-methods and/or based on an application that is associated to the data traffic. In particular, the configurations are adjusted with respect to the common objective.

The network operator as the "best" expert regarding "questions" related to the network can determine the common objective and accordingly adjust the configuration with respect to his expert knowledge and of the overall situation of the communication network. It is also possible that it is being signaled to the user that the configurations interfere with each other and that he is being provided with the possibility to set the common objective according to his wishes because it might happen that the user wants to set a certain common objective that cannot be guessed by the network operator or by the artificial intelligence methods. In a similar way this can be done by the service or the application that is associated to the data traffic because the QoS parameters can be requested by the application or to buy the service so that the application or the service be configured to execute the steps of the inventive method. For that purpose, the service or the application is being configured to manipulate at least one of the configurations accordingly. It is also possible that an artificial intelligence or machine learning performs the determination of the common objective and/or performs the adjustment of at least one of the configurations. The artificial intelligence is based on a trained neural network that was trained with training data representing different combinations of the ATSSS and network slicing configurations that were marked as being a good (mutually supporting) or a bad (mutually interfering) combination of the respective configurations accordingly. This marking can be performed by technical experts. Such an artificial intelligence provides the advantage that it can be used in automatic fashion and that it is being able to predict a good combination of configurations in previously unknown configuration scenarios.

In an embodiment, the determination and/or the adjusting of the quality is based on look-up tables and/or AI-methods.

In particular, those lookup tables can be created by the network operator or even by the artificial intelligence. The lookup tables can list good and/or bad combinations of configurations or of the different objectives. It is also possible that the artificial intelligence, that was trained as described above, performs the determination and/or the adjusting of the quality of the data traffic.

In an embodiment, the determination of the objectives and/or the adjusting of the configurations uses NWDAF information, access information, network information, service demand, costs, and/or tariff conditions. The core network provides interfaces to assess these information.

This provides the advantage that the configurations can be dynamically adjusted, in particular with respect to the current network situation. For example, NWDAF is a 5G 3GPP standard method used to collect data from user equipment, network functions, and operations, administration, and maintenance (OAM) systems, etc. from the 5G Core, Cloud, and Edge networks that can be used for analytics. This information can be used to judge the current status of the network or historic NWDAF data can be used to extrapolate the performance of the network with respect to various time points. For example, NWDAF can indicate that currently a cellular access, in particular with in certain cell, will probably result in a worse latency performance than using an available Wi-Fi connection. In this case, the adjustment of the configurations will be performed in a way that the user uses the available Wi-Fi if the objective relates to improving the latency value. In principle, the same can be applied for other objectives like improving the bandwidth or the like.

The access information can be used to assess latency parameters of the data traffic, to assess the availability of different accesses like 4G, 5G, 6G and/or Wi-Fi, or the ID of the communicating parties, service or application of the data traffic. If a certain access is not being available, then the configurations can be adjusted so as to not use this access. The ID of the communicating parties, service or of the application can be used to assess certain QoS values that are associated to those IDs and to adjust the configurations accordingly. For example, remote operation of a vehicle typically requires low latency and very reliable communication. If the use case is associated to such a remote operation, the adjustment can be performed accordingly. The advantages of the information regarding the service demand can be similar to those explained within the context of the ID. Typically, using the Wi-Fi path is the better option for the network operator regarding the costs that are associated with the data traffic. Hence, the configurations can be adjusted accordingly to make the data traffic as cheap (in particular with respect to network resources) as possible.

In an embodiment, the assessment of this information is related to an overall network condition, in particular to the network condition of a cell to which a UE that is related to the data traffic is being connected to.

The overall network condition concerns other available slices and or network resources. The rationale behind this feature is that the network is being composed out of multiple slices and/or multiple ATSSS configurations that can have an impact on each other. Considering those other slices and/or ATSSS configurations can provide useful information how to adjust the ATSSS configuration and/or the network slice and configuration in the best possible way. In particular this provides knowledge of available network resources that will be related to the various configurations. For example, it can be determined that the mobile traffic within a mobile cell is already so high that communication with a certain required value of bandwidth will not be possible so that the ATSSS configuration is being adjusted as to use the Wi-Fi path - at least until these conditions change again.

In an embodiment, the adjusted ATSSS rules trigger a dynamic switch from Wi-Fi access to mobile access or from the mobile access to the Wi-Fi access if this leads to an improvement regarding the common objectives or the quality of the data traffic.

This provides the advantage that based on the currently available network situation and/or QoS requirements a dynamic and flexible switching between mobile and Wi-Fi access is being possible. In an embodiment, this requires a regular measurement and assessment of the network conditions.

In an embodiment, the adjustment of the network slice configuration and/or the ATSSS configuration comprises to adjust S-NSSAI, SST, ATSSS steering function and/or steering mode data.

This provides the advantage, that currently already available data protocols can be used in a known way to perform the adjustment.

In an embodiment, mutually supporting combinations of network slice configuration and ATSSS configuration are provided as templates using for example Network Slice Template, in particular by the network operator and or the AI.

This provides the advantage, that those templates of combinations that provide a good quality of the data traffic can be selected by users. In particular, those templates can be labeled with the respective objective.

In an embodiment, the network slice configuration and ATSSS configuration is related to a single network operator.

In principle it is also possible that the Wi-Fi communication can be provided by a further network operator. However, having a single network operator provides the advantage that this single network operator has knowledge about the network conditions of the mobile access and of the Wi-Fi access so that both of these conditions can be considered to adjust the configurations in the best possible way.

According to a second aspect of the invention, a Network Coordinating Unit is being disclosed (can be implemented on a UE or within the network, configures to perform the steps according to the method) comprising a communication interface configured for obtaining a network slice configuration and an ATSSS configuration for a communication use case; and a processing unit having an algorithm that is configured
- to determine a quality of a combination of the network slice configuration and the ATSSS configuration and to determine if the quality represents a mutually supporting combination or a mutually interfering combination of a network configuration.

This basically provides the same advantages as already described within the context of the method above.

In particular, the network coordination unit is also configured to extract a first objective of the network slice and to extract a second objective of the ATSSS configuration

It is possible to implement the Network Coordinating Unit on the UE and/or on other entities within the network like on the 3GPP NF, e.g. SMF, AMF, PCF, UPF, NEF or the operation support system (OSS) are to integrate it into the network API that is connected to a customer interface. The can be configured to perform the steps of the method described above.

According to a third aspect of the invention a communication system is being provided having an ATSSS architecture and a 5G architecture and/or a 6G architecture, wherein the communication system is designed to perform the steps according to the method described above. In particular, the communication system comprises the inventive network coordination unit.

According to a fourth aspect of the invention a computer program is being disclosed comprising instructions which, when the program is executed by a network entity - in particular by the Network Coordinating Unit - cause the network entity to carry out the steps of the method described above.

### LISTING OF FIGURES

In the following, preferred implementation examples of the present invention are explained with reference to the accompanying figure:
- Fig. 1:: shows an overview of the principle of network slicing;
- Fig. 2:: shows an overview of the ATSSS reference architecture;
- Fig. 3:: shows a table of the structure of ATSSS rules (3GPP TS.23.501 v18.0.0);
- Fig. 4:: shows the inventive communication system comprising the inventive Network Coordinating Unit along with the inventive method;

### DETAILED DESCRIPTION

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

Fig. 4 shows an inventive communication system 100 comprising the inventive network coordination unit 110, in particular the network coordination unit 110 can be an ATSSS-NWS coordination unit.

An API can be provided that is being used by a customer interface 115 to set an ATSSS configuration and a network slicing configuration by a user. Over a communication link 120, the network coordinating unit 110 obtains both the ATSSS configuration and the network slicing configuration. In other words it can be said that the network coordinating unit 110 obtains the combination of both configurations.

The network coordination unit 110 performs the steps 125: obtaining a network slice configuration and an ATSSS configuration for a communication use case; and step 130: determining a quality of a combination of the network slice configuration and the ATSSS configuration and determining if the quality represents a mutually supporting combination or a mutually interfering combination of a network configuration.

An exemplary of the inventive method can be described as follows:
It starts on the left with the customer configuration interface 115, which connects via the communication link 120 to a Network Exposure Function 135 and finally the PCF (Policy Controlling function) 140 to store a selected configuration. The network coordinating unit 110 is placed between the customer interface 115 and the NEF 135 but it could be also placed for example between NEF 135 and the PCF 140. The abstracted customer interface provides high-level network configurations for the Cellular or the Wi-Fi connectivity. Any selection in the cellular section normally leads to a configuration of a network slice, while a selection in the Wi-Fi section to a certain ATSSS configuration. The "Best Performance" or "Only" option for Wi-Fi activates either traffic splitting or Wi-Fi only usage if available. Both are contrary if the user also selects "Low Latency" in the cellular plane. Without the network coordinating unit 110 both configurations (that can also be specified as rules) for network slicing and ATSSS would sent independently towards the 5G core (arrows in forward direction) to finally reach the PCF 140 that would apply these configurations accordingly. However, this would lead to the case that the combination of ATSSS configuration a network slice configuration would hinder each other. With the help of the network coordinating unit 110 that obtains these configurations such an interference is detected and either rejected or adjusted for an efficient combination of network slicing and ATSSS. In the example, the adjustment could be setting SST=2 for the network slicing configuration and ATSSS with steering mode "smallest delay".

A return channel 145 (arrows backwards direction) can provide notifications from the network coordinating unit 110 to the customer interface 115 and /or from the 5G core to the network coordinating unit 110. The first can be used to recognize errors in the customer interface and the second to confirm the applied settings. This provides the benefit that ATSSS steering function and steering mode is in accordance with the goal of the selected Network Slice Configuration.

The configuration of both technologies (ATSSS and network slicing) can be derived from a lookup table holding valid configurations or is using heuristics (ML/AI) and takes into account 3GPP NWDAF information, Access information, Network information, Service demand, Cost, Tariff conditions. Valid configurations might contain information about S-NSSAI, SST, ATSSS steering function or ATSSS steering mode. This has the benefit, that configurations of both technologies can be dynamically adjusted over time.

In a further embodiment the network coordinating unit 110 detects or is informed about contrasting configurations during a setup of NWS or ATSSS, during its reconfiguration (adjustment) or when network conditions change, e.g., Access characteristics, Network load, Service demand, Costs, Tariff. This has the benefit that dynamically changing conditions can be considered so that the network coordinating unit 110 can always trigger the optimal configuration of ATSSS and NWS.

In a further embodiment, the dynamic detection of bad configurations or a reconfiguration of one of the technologies is taking ATSSS measurement into account. Those measurement information are collected from PMF or ATSSS-HL congestion control. This has the benefit that the frequent or even real-time ATSSS inherent measurement of Access characteristics (latency, access availability, congestion, packet loss) allow high dynamic evaluation and readjustment of ATSSS7NWS configuration.

In a further embodiment, the network coordinating unit 110 interprets non-valid or valid configuration of NWS and ATSSS as part of a Network Slice Template (NST). This has the benefit, that NST as existing technology to describe NWS configurations is re-used for seamless integration into today's implementation.

In a further embodiment, the network coordinating unit 110 takes into account the overall network configuration and/or load with network slices and/or ATSSS and dynamically re-adjust configuration based on the overall development. This has the benefit that depending on the number of network slices with low-latency configuration (SST=2), ATSSS for other customer can be re-adjusted to shift more traffic into the Wi-Fi path to keep mobile 3GPP resources for low-latency transmission.

## Claims

1. A method for evaluating a quality of a combination of a network slice configuration and an ATSSS configuration for providing data traffic in a network, wherein the method is performed by a Network Coordinating Unit and comprises the following steps
• obtaining a network slice configuration and an ATSSS configuration for a communication use case;
• determining a quality of a combination of the network slice configuration and the ATSSS configuration and determining if the quality represents a mutually supporting combination or a mutually interfering combination of a network configuration.

2. The method of claim 1, wherein the method further comprises
• extracting a first objective of the network slice configuration and extracting a second objective of the ATSSS configuration; and
• determining if the quality represents a mutually supporting combination or a mutually interfering combination of a network configuration with regard to the first objective and the second objective.

3. The method of any of the claims, wherein a common objective is determined, in particular if the first and the second objective are mutually interfering with each other.

4. The method of any of the claims, wherein the network slice configuration and/or the ATSSS configuration is adjusted, in particular to improve the network performance of the combined usage of ATSSS and network slicing, in particular with regard to the common objective.

5. The method of claim 4, wherein the adjustment of the configurations and/or the determination of the common objective is based on a policy of a network operator, user preferences. AI-methods, Machine Learning and/or based on an application that is associated to the data traffic.

6. The method of any of the claims, wherein the determination and/or the adjusting of the quality is based on look-up tables and/or an artificial intelligence "AI" and/or Machine Learning.

7. The method of any of the claims, wherein the determination and/or the adjusting assesses NWDAF information, access information, network information, service demand, costs, and/or tariff conditions.

8. The method of claim 7, wherein the assessment of this information is related to an overall network condition, in particular to the network condition of a cell to which a UE that is related to the data traffic is being connected to.

9. The method of claims 7 to 8, wherein adjusted ATSSS rules trigger a dynamic switch from Wi-Fi access to mobile access or from the mobile access to the Wi-Fi access if this leads to an improvement regarding the common objectives or the quality of the data traffic.

10. The method of any of the claims 4 to 9, wherein the adjustment of the network slice configuration and/or the ATSSS configuration comprises to adjust S-NSSAI, SST, ATSSS steering function and/or steering mode data.

11. The method of any of the claims, wherein mutually supporting combinations of network slice configuration and ATSSS configuration are provided as templates, in particular by the network operator and or the AI and/or Machine Learning.

12. The method of any of the claims, wherein the network slice configuration and ATSSS configuration is related to a single network operator.

13. Network Coordinating Unit comprising
a communication interface configured for obtaining a network slice configuration and an ATSSS configuration for a communication use case; a processing unit having an algorithm that is configured
• to determine a quality of a combination of the network slice configuration and the ATSSS configuration and to determine if the quality represents a mutually supporting combination or a mutually interfering combination of a network configuration.

14. Communication system having an ATSSS architecture and a 5G or 6G architecture, wherein the communication system comprises a Network Coordinating Unit adapted to perform the steps according to the method of any of the claims 1-12.

15. A computer program comprising instructions which, when being executed by a Network Coordinating Unit, cause the Network Coordinating Unit to carry out the steps of the method of claim 1.

## Patentansprüche

1. Verfahren zum Evaluieren einer Qualität einer Kombination aus einer Netzwerk-Slice-Konfiguration und einer ATSSS-Konfiguration zum Bereitstellen von Datenverkehr in einem Netzwerk, wobei das Verfahren von einer Network Coordinating Unit durchgeführt wird und die folgenden Schritte umfasst:
• Beziehen einer Netzwerk-Slice-Konfiguration und einer ATSSS-Konfiguration für einen Kommunikations-Anwendungsfall;
• Bestimmen einer Qualität einer Kombination der Netzwerk-Slice-Konfiguration und der ATSSS-Konfiguration und Bestimmen, ob die Qualität eine wechselseitig unterstützende Kombination oder eine wechselseitig interferierende Kombination einer Netzwerkkonfiguration darstellt.

2. Verfahren nach Anspruch 1, wobei das Verfahren ferner umfasst:
• Extrahieren einer ersten Zielvorgabe der Netzwerk-Slice-Konfiguration und Extrahieren einer zweiten Zielvorgabe der ATSSS-Konfiguration; und
• Bestimmen, ob die Qualität im Hinblick auf die erste Zielvorgabe und die zweite Zielvorgabe eine wechselseitig unterstützende Kombination oder eine wechselseitig interferierende Kombination einer Netzwerkkonfiguration darstellt.

3. Verfahren nach einem der Ansprüche, wobei, insbesondere falls die erste und die zweite Zielvorgabe wechselseitig miteinander interferieren, eine gemeinsame Zielvorgabe bestimmt wird.

4. Verfahren nach einem der Ansprüche, wobei, insbesondere um die Netzwerkleistung der kombinierten Verwendung von ATSSS und Netzwerk-Slicing zu verbessern, die Netzwerk-Slice-Konfiguration und/oder die ATSSS-Konfiguration, insbesondere in Bezug auf die gemeinsame Zielvorgabe, angepasst wird.

5. Verfahren nach Anspruch 4, wobei die Anpassung der Konfigurationen und/oder die Bestimmung der gemeinsamen Zielvorgabe auf einer Richtlinie eines Netzwerkbetreibers, Benutzerpräferenzen, KI-Verfahren, maschinellem Lernen und/oder einer mit dem Datenverkehr assoziierten Anwendung basiert.

6. Verfahren nach einem der Ansprüche, wobei die Bestimmung und/oder das Anpassen der Qualität auf Nachschlagetabellen und/oder einer künstlichen Intelligenz "KI" und/oder maschinellem Lernen basiert.

7. Verfahren nach einem der Ansprüche, wobei die Bestimmung und/oder das Anpassen NWDAF-Informationen, Zugriffsinformationen, Netzwerkinformationen, Dienst-Nachfrage, Kosten und/oder Tarifbedingungen bewertet.

8. Verfahren nach Anspruch 7, wobei die Bewertung der Informationen mit einer Bedingung im Gesamtnetzwerk, insbesondere mit der Netzwerkbedingung einer Zelle, mit welcher ein mit dem Datenverkehr in Zusammenhang stehendes UE verbunden wird, in Zusammenhang steht.

9. Verfahren nach den Ansprüchen 7 bis 8, wobei angepasste ATSSS-Regeln einen dynamischen Wechsel von Wi-Fi-Zugriff auf mobilen Zugriff oder von dem mobilen Zugriff auf den Wi-Fi-Zugriff auslösen, falls dies zu einer Verbesserung bezüglich der gemeinsamen Zielvorgaben oder der Qualität des Datenverkehrs führt.

10. Verfahren nach einem der Ansprüche 4 bis 9, wobei die Anpassung der Netzwerk-Slice-Konfiguration und/oder der ATSSS-Konfiguration umfasst, eine S-NSSAI-, SST-, ATSSS-Steuerfunktion und/oder -Steuermodusdaten anzupassen.

11. Verfahren nach einem der Ansprüche, wobei, insbesondere durch den Netzwerk-Betreiber oder die KI und/oder maschinelles Lernen, wechselseitig unterstützende Kombinationen einer Netzwerk-Slice-Konfiguration und einer ATSSS-Konfiguration als Vorlagen bereitgestellt werden.

12. Verfahren nach einem der Ansprüche, wobei die Netzwerk-Slice-Konfiguration und die ATSSS-Konfiguration mit einem einzelnen Netzwerkbetreiber in Zusammenhang stehen.

13. Network Coordinating Unit, umfassend
eine Kommunikationsschnittstelle, die eingerichtet ist zum Beziehen einer Netzwerk-Slice-Konfiguration und einer ATSSS-Konfiguration für einen Kommunikations-Anwendungsfall;
eine Verarbeitungseinheit mit einem Algorithmus, der eingerichtet ist zum
• Bestimmen einer Qualität einer Kombination der Netzwerk-Slice-Konfiguration und der ATSSS-Konfiguration und Bestimmen, ob die Qualität eine wechselseitig unterstützende Kombination oder eine wechselseitig interferierende Kombination einer Netzwerkkonfiguration darstellt.

14. Kommunikationssystem mit einer ATSSS-Architektur und einer 5G- oder 6G-Architektur, wobei das Kommunikationssystem eine Network Coordinating Unit umfasst, die dazu ausgelegt ist, die Schritte gemäß dem Verfahren nach einem der Ansprüche 1 bis 12 durchzuführen.

15. Computerprogramm, umfassend Anweisungen, die, wenn sie von einer Network Coordinating Unit ausgeführt werden, die Network Coordinating Unit dazu veranlassen, die Schritte des Verfahrens nach Anspruch 1 auszuführen.

## Revendications

1. Procédé d'évaluation de la qualité d'une combinaison d'une configuration de tranche de réseau et d'une configuration ATSSS pour la fourniture de trafic de données dans un réseau, dans lequel le procédé est mis en œuvre par une unité de coordination de réseau et comprend les étapes suivantes :
• obtention d'une configuration de tranche de réseau et d'une configuration ATSSS pour un cas d'utilisation de communication ;
• détermination d'une qualité d'une combinaison de la configuration de tranche de réseau et de la configuration ATSSS et détermination si la qualité représente une combinaison mutuellement compatible ou une combinaison mutuellement interférente d'une configuration de réseau.

2. Procédé selon la revendication 1, dans lequel le procédé comprend en outre
• l'extraction d'un premier objectif de la configuration de tranche de réseau et l'extraction d'un deuxième objectif de la configuration ATSSS ; et
• la détermination si la qualité représente une combinaison mutuellement compatible ou une combinaison mutuellement interférente d'une configuration de réseau par rapport au premier objectif et au deuxième objectif.

3. Procédé selon une quelconque des revendications, dans lequel un objectif commun est déterminé, en particulier si le premier et le deuxième objectif interfèrent mutuellement l'un avec l'autre.

4. Procédé selon une quelconque des revendications, dans lequel la configuration de la tranche de réseau et/ou la configuration ATSSS sont ajustées, notamment pour améliorer les performances du réseau grâce à l'utilisation combinée de l'ATSSS et du découpage réseau, notamment en ce qui concerne l'objectif commun.

5. Procédé selon la revendication 4, dans lequel l'ajustement des configurations et/ou la détermination de l'objectif commun reposent sur la politique de l'opérateur de réseau, des préférences d'utilisateur, des méthodes d'IA, l'apprentissage automatique et/ou une application associée au trafic de données.

6. Procédé selon une quelconque des revendications, dans lequel la détermination et/ou l'ajustement de la qualité reposent sur des tables de recherche et/ou une intelligence artificielle « IA » et/ou l'apprentissage automatique.

7. Procédé selon une quelconque des revendications, dans lequel la détermination et/ou l'ajustement évaluent des informations NWDAF, des informations d'accès, des informations de réseau, une demande de service, des coûts et/ou des conditions tarifaires.

8. Procédé selon la revendication 7, dans lequel l'évaluation de ces informations est liée à l'état général du réseau, en particulier à l'état du réseau d'une cellule à laquelle un UE lié au trafic de données est connecté.

9. Procédé selon les revendications 7 et 8, dans lequel des règles ATSSS ajustées déclenchent un basculement dynamique de l'accès Wi-Fi à l'accès mobile ou de l'accès mobile à l'accès Wi-Fi si cela conduit à une amélioration des objectifs communs ou de la qualité du trafic de données.

10. Procédé selon une quelconque des revendications 4 à 9, dans lequel l'ajustement de la configuration de tranche de réseau et/ou de la configuration ATSSS comprend l'ajustement des données S-NSSAI, SST, de la fonction de pilotage ATSSS et/ou des données de mode de pilotage.

11. Procédé selon une quelconque des revendications, dans lequel des combinaisons mutuellement compatibles de configuration de tranche de réseau et de configuration ATSSS sont fournies comme modèles, notamment par l'opérateur de réseau et/ou l'IA et/ou l'apprentissage automatique.

12. Procédé selon une quelconque des revendications, dans lequel la configuration de tranche de réseau et la configuration ATSSS sont liées à un seul opérateur de réseau.

13. Unité de coordination de réseau comprenant
une interface de communication configurée pour obtenir une configuration de tranche de réseau et une configuration ATSSS pour un cas d'utilisation de communication ;
une unité de traitement dotée d'un algorithme qui est configuré pour
• déterminer une qualité d'une combinaison de la configuration de la tranche de réseau et de la configuration ATSSS et déterminer si la qualité représente une combinaison mutuellement compatible ou une combinaison mutuellement interférente d'une configuration de réseau.

14. Système de communication doté d'une architecture ATSSS et d'une architecture 5G ou 6G, dans lequel le système de communication comprend une unité de coordination de réseau adaptée pour exécuter les étapes du procédé selon une quelconque des revendications 1 à 12.

15. Programme informatique comprenant des instructions qui, lorsqu'elles sont exécutées par une unité de coordination de réseau, exécutent les étapes du procédé selon la revendication 1.
